# EUROPEAN PATENT APPLICATION

(11) **EP 2 894 440 A1**
(43) Date of publication of application: **15.07.2015**
(21) Application number: 12884092.3
(22) Date of filing: 04.10.2012
(51) Int. Cl.: G01F 1/06

(54) **MULTI-STREAM WATER METER**

(30) Priority: 04.09.2012 UA UA
(71) Applicant: Cherepnin, Oleg Mikhailovych, Kiev 02140 (UA)
(72) Inventor: Cherepnin, Oleg Mikhailovych, Kiev 02140 (UA)
(74) Representative: Michalski Hüttermann & Partner Patentanwälte mbB
(86) International application number: PCT/UA2012/000090
(87) International publication number: WO 2014/039022

(57) **Abstract**

A multi-jet water meter, which includes a pipeline joining body, a counter mechanism, a basket with holes for water passage that is magnetically bound with the counter mechanism, a vane wheel installed on the axis of the basket, while the pipeline joining body has an inlet that is the entrance to the basket's water supply hollow and an outlet, the basket (the axis and the magnet) is located in a separate block (measuring block), the body of which consists of upper and lower chambers and is hermetically installed into, attached to, and fixed in the pipeline joining body, while the counter mechanism is located in a separate block (calculating block), which is made with a possibility of docking and fixating coaxially with the measuring block's upper chamber, wherein the hollow for basket's with the vane wheel water supply, located in the pipeline joining body, is made with a possibility of unilateral tangential supply.

## Description

The present invention relates to instrumentation, namely to the devices intended for the pipeline water quantity measurement.

By similarity in its set of features and technical result, the best known water meter (Ukrainian Patent number 64431, Nov. 10, 2011, Bul. #21) includes a pipeline joining body, a counter mechanism, a basket with has holes for water passage that is magnetically bound with the counter mechanism, a vane wheel installed on the axis of the basket, the basket (the axis and the magnet) is located in a separate block (measuring block), the body of which consists of upper and lower chambers and is hermetically installed, attached, and fixed in the pipeline joining body, while counter mechanism is located in a separate block (calculating block), which is made with a possibility of docking and fixating coaxially with the measuring block's upper chamber.

The drawback of the before mentioned meter are hydraulic pressure drops. The water flow changes its direction repeatedly during its movement through the meter, which leads to pressure drops. Besides, this meter's production has high material input.

The present invention solves the pressure drops problem by ensuring a smoother water flow trajectory from the water supply inlet to the basket with the vane wheel. The claimed constructive execution allows a reduction in material input.

The mentioned problem is solved through using a multi-jet water meter, which includes a pipeline joining body, a counter mechanism, a basket with holes for water passage that is magnetically bound with the counter mechanism, a vane wheel installed on the axis of the basket, while the pipeline joining body has an inlet that is the entrance to the hollow for basket water supply and an outlet, the basket (the axis and the magnet) is located in a separate block (measuring block), the body of which consists of upper and lower chambers and is hermetically installed in the pipeline joining body, attached to it, and fixed in the pipeline joining body, while counter mechanism is located in a separate block (calculating block), which is made with a possibility of docking and fixating coaxially with the measuring block's upper chamber, while the hollow for basket's with the vane wheel water supply, located in the pipeline joining body, is made with a possibility of unilateral tangential supply. According to the invention the inlet and the outlet, destined for water inflow and outflow, are situated at the same level, while the inlet is located below the level of the basket, and the basket's water supply hollow is in the form of an ascending helical line from the inlet level to the basket's location level. In the multi-jet water meter, toward the water movement direction, the basket's holes sectional area is increasing proportionally to the falling of the water thrust. The difference between the holes quantity and vanes of the vane wheel quantity can be chosen from a row of numbers 0, 1, 2, 3, 4, 5.

The invention is explained by the following figures:

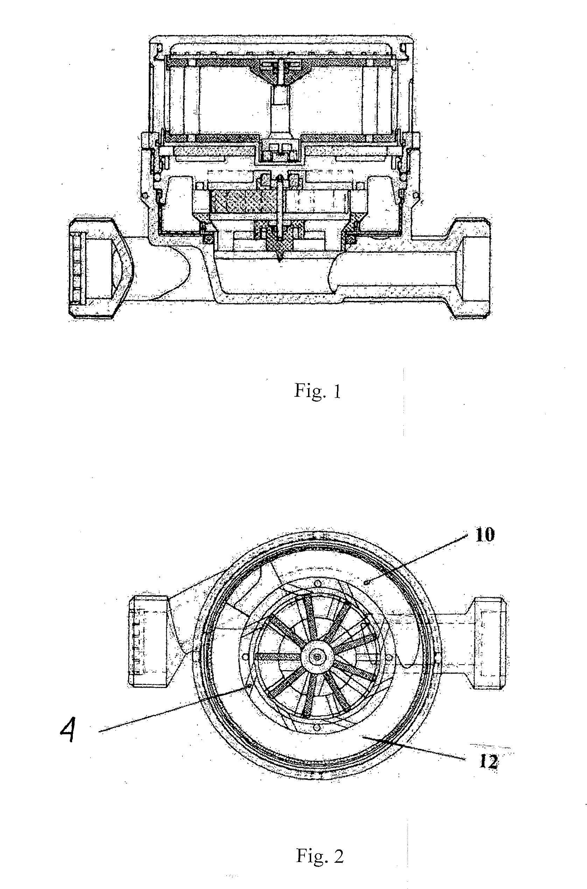

Fig. 1 - water meter's general view in longitudinal section
Fig. 2 - sectional top view

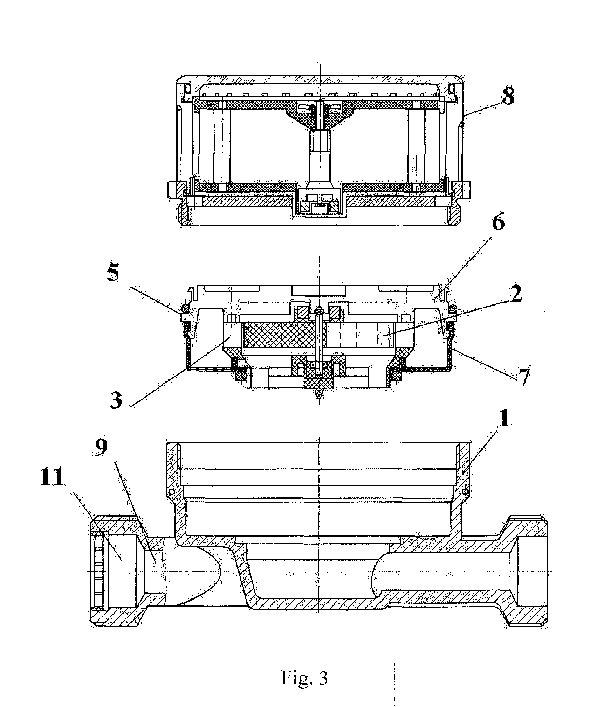

Fig. 3 - block by block meter depiction

The multi-jet water meter includes the a pipeline joining body **1**, a counter mechanism, a basket **3** with has holes **4** for water passage that is magnetically bound with the counter mechanism, a vane wheel **2** installed on the axis of the basket **3**, while the pipeline joining body **1** has an inlet that is the entrance to the basket's **3** water supply hollow **9** and an outlet, the basket **3** (the axis and the magnet) is located in a separate block (measuring block **5**), the body of which consists of upper **6** and lower **7** chambers and is hermetically installed, attached, and fixed in the pipeline joining body **1**, while counter mechanism is located in a separate block (calculating block **8**), which is made with a possibility of docking and fixating coaxially with the measuring block's **5** upper chamber **6.** The basket's **3** water supply hollow **9** of the pipeline joining body **1** is designed for unilateral tangential basket's **3** water supply, and has an ascending helical surface **10** from the inlet **11** level, to the basket **3** location level **12.** The surface's **10** angle of ascent amounts, for example, from six to twelve degrees.

The wide range of angle choice allows varying the area of water flow's primary overrunning to the holes **4** of the basket **3**. This enables the vane wheel's **2** more even dynamic loading. Besides, a wide range of basket **3** holes **4** quantity and the vanes of the vane wheel quantity**2** combinations make varying the operating conditions possible. For example, with the difference between their quantities equal to zero, a balanced vane wheel's **2** rotational motion is provided. This decreases side friction while the vane wheel **2** is in motion, which increases meter's sensitivity, but the vane wheel's **2** rotation will be pulsing. In case the difference is other than zero, the vane wheel **2** rotation's pulsation will decrease, but the vane wheel **2** axis' side friction problem will emerge.

The multi-jet water meter assembly process is done block by block. After the calculating **8** and the measuring **5** blocks' assembly, each block's operational checkup is being held at separate checking stands. Herewith their adjustment and testing is conducted.

The assembly of the meter is finalized by locating the measuring block **5** inside the pipeline joining body **1**. After that the calculating block **8** is attached to the measuring block **5.**

The multi-jet water meter works as follows. The water flow that has to be measured is supplied to the pipeline joining body **1** through an inlet **11.** The location of the inlet **11** and the basket's **3** water supply hollow **9** enables unilateral tangential water flow input in relation to the basket **3**. The water flow ascends smoothly without sharp motion direction change through the helical surface **10** of the basket's **3** water supply hollow **9** with the angle of ascent, for example 8°, to the basket **3** level **12**. The water passes through basket's **3** holes **4** making the vane wheel **2** rotate not changing its helical direction and exits the counter through the outlet **11.** The functioning of the counter mechanism of calculating block **8** is done through magnetic connection with the vane wheel **2** and thus the meter's readings on water consumption are displayed.

Unilateral smooth water ascending through the helical surface **10** with an angle of ascend for example from twelve to sixteen degrees, to the basket **3** location level **12**, its tangential supply and further helical movement in the same direction inside the basket **3**, its outflow through the outlet **11** provides water flow with minimal hydraulic pressure losses and without water flow inclination to cavitation processes emersion.

Tangential basket's water supply and its further smooth helical movement inside the meter allow optimizing geometrical dimensions of the meter and notably decrease its material input.

## Claims

1. A multi-jet water meter, which includes a pipeline joining body, a counter mechanism, a basket with holes for water passage that is magnetically bound with the counter mechanism, a vane wheel installed on the axis of the basket, while the pipeline joining body has an inlet that is the entrance to the basket's water supply hollow and an outlet, the basket (the axis and the magnet) is located in a separate block (measuring block), the body of which consists of upper and lower chambers and is hermetically installed into, attached to, and fixed in the pipeline joining body, while the counter mechanism is located in a separate block (calculating block), which is made with a possibility of docking and fixating coaxially with the measuring block's upper chamber, wherein the hollow for basket's with the vane wheel water supply, located in the pipeline joining body, is made with a possibility of unilateral tangential supply.

2. The multi-jet water meter according to claim 1, wherein the inlet and the outlet are situated at the same level, while the inlet is located below the level of the basket, and the basket's water supply hollow is in the form of an ascending helical line from the inlet level to the basket's location level.

3. The multi-jet water meter according to claim 1, wherein toward the water movement direction, the basket's holes sectional area is increasing proportionally to the falling of the water thrust.

4. The multi-jet water meter according to claim 1, wherein the difference between the holes quantity and vanes of the vane wheel quantity can be chosen from a row of numbers 0, 1,2, 3, 4, 5.
